# EUROPEAN PATENT SPECIFICATION

(11) **EP 0 958 731 B1**
(45) Date of publication and mention of the grant of the patent: **26.03.2003**
(21) Application number: 99201435.7
(22) Date of filing: 07.05.1999
(51) Int. Cl.: A01D 78/10

(54) **An implement for laterally displacing crop lying on the soil**
Gerät zum Versetzen von auf dem Bodem liegendem Erntegut
Appareil à déplacer des végétaux se trouvant sur le sol

(30) Priority: 20.05.1998 NL 1009224
(43) Date of publication of application: 24.11.1999
(73) Proprietor: MAASLAND N.V., 3155 PD Maasland (NL)
(72) Inventor: van der Lely, Alexander, 3065 NA Rotterdam (NL); van den Engel, Alfonsus Jacobus, 3123 CM Schiedam (NL)
(74) Representative: Corten, Maurice Jean F.M.

(56) References cited:
- EP-A- 0 485 698
- EP-A- 0 819 372
- DE-A- 2 828 282
- DE-U- 29 716 391
- FR-A- 2 663 189
- GB-A- 992 336
- GB-A- 1 055 438

## Description

The invention relates to an implement for laterally displacing crop lying on the soil according to the preamble of claim 1.

Such an implement is known e.g. from the patent specification GB-A-992336. The implement described herein comprises four rake members. A transverse carrier comprises a central pair of rake members indicated as a first group of rake members. The transverse carrier has at each end a vertical pivot for an extension arm. At the ends of both extension arms the rake members of the second group are mounted. The implement can be arranged such that the rake members of the first group are orientated along each other and in front of the two outer rake members. The right hand rake members can be rotated clockwise while the left hand rake members rotate anticlockwise such that at either side of the implement a swath is formed. The extension arms can be pivoted relatively to the transverse carrier about the vertical pivot axes such that the width of implement is reduced.

In the patent specification GB-A-1055438 a hay making machine is described with a leading central group of two rake members and a second group of rake members comprising two lateral pairs, which pairs are arranged rearwardly and laterally offset to the central pair. The direction of rotation of each pair is individually variable. For raking, the rake members of the leading group rotate such that in plan view the rake member on the right hand side rotates clockwise and the rake member on the left hand side rotates anticlockwise, while the rake members of a lateral pair rotate in opposite directions and such that the outer rake member of the right hand repair rotates anticlockwise and the outer rake member of the left hand pair rotates clockwise. Two swaths are formed between the rake members of the lateral pairs, however not at the two outer lateral sides of the implement, so that not the maximum working width of the implement is used for swathing.

In the patent application FR-A-2663189 a hay making machine is described with a group of two large rake members placed along each other. Both rake members are driven in opposite directions such that seen in plan view the rake member at the right hand side is driven anticlockwise. The crop is raked from the outside to the inside, in such a manner that in the centre of the implement a swath is formed. For the purpose of aerating the crop lying in the zone between these rake members, a group of two smaller rake members is provided in front of this zone which rake members rotate in opposite directions. The small rake member, seen in the direction of travel, located on the right hand rotates clockwise. For being brought into the transport position all rake members are pivotable upwardly about axes orientated in the direction of travel.

It is the object of the invention to provide an implement of the first mentioned type above which width can be reduced in an alternative way for bringing the implement into a transport position.

According to the invention this is achieved by the measurements of the characterizing part of claim 1.

In accordance with a further aspect of the invention, seen in the direction of travel, two groups of running wheels are disposed between the rake members, the distance between the outer lateral sides of the running wheels being smaller than the distance between the outer lateral sides of the paths described by the tines of the outer rake members of the leading group. In this manner a proper and balanced support of the implement can be obtained.

The invention will be set out in further detail on the basis of an exemplary embodiment, while some more advantages of the implement will be mentioned.

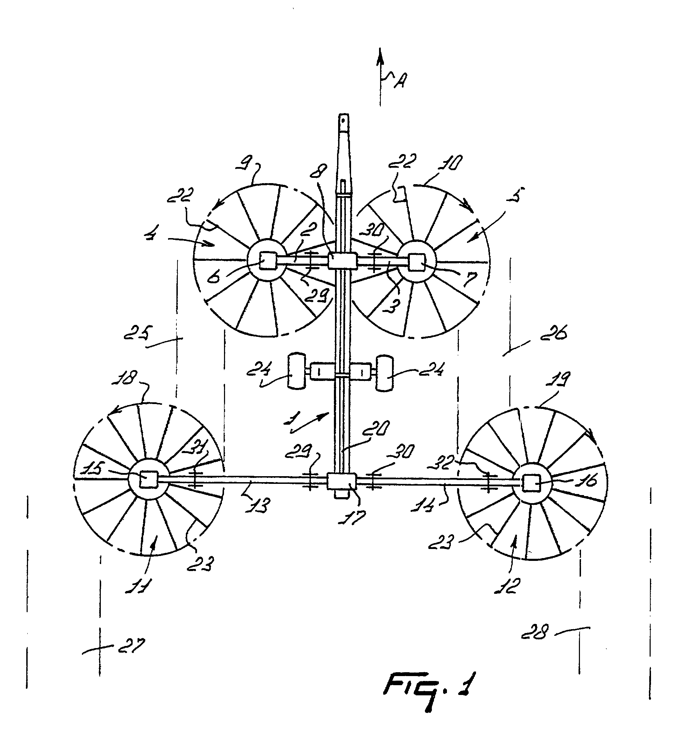

Figure 1 is a plan view of the implement.

The implement according to the invention is provided with a frame beam 1 extending in the direction of travel A and capable of being coupled at its front side to a tractor.

On the left-hand side of the frame beam 1 there is fitted a frame beam 2 and on the right-hand side thereof a frame beam 3, both extending transversely to the direction of travel. Each of these frame beams 2 and 3 carries at its free end a rake member 4, 5 respectively rotating about an upwardly orientated axis.

The rake members are provided with gearboxes 6, 7 respectively whose drive is coupled with a transmission box 8 disposed on the frame beam 1 via intermediate shafts that are preferably located in the frame beams 2 and 3.

The drive of the rake members 4 and 5 is such that the rake member 4 rotates anticlockwise and the rake member 5 rotates clockwise. The distance between the axes of rotation of the rake members 4 and 5 is such that, in plan view, the outer tine paths 9, 10 respectively are close to each other and preferably are tangential or intersect.

In the latter case, of course, the tines of one rake member should be arranged relative to the tines of the other rake member so as not to come into contact with each other when rotating.

The implement further comprises a second group of rake members 11, 12 respectively which, seen in the direction of travel, are fitted behind the first group of rake members to a frame beam 13, 14 respectively disposed transversely to the direction of travel. Like the rake members 4 and 5, these rake members are each driven about an upwardly orientated shaft. (These rake members are designed in a manner known per se; the Lely Hibiscus can be mentioned as an example thereof.)

The frame beams 13, 14 respectively are fastened to the frame beam 1. Above each rake member 11, 12 respectively there is disposed a gearbox 15, 16 respectively via which the rake members 11, 12 respectively are each driven by means of intermediate shafts, located in the frame beams 13, 14 respectively, and a centrally located transmission box 17.

The direction of rotation of the rake member 11 corresponds to that of the rake member 4 and the direction of rotation of the rake member 12 corresponds to that of the rake member 5. The distance between the rake members 11 and 12 is such that, seen in the direction of travel A, the outermost left-hand part of the left-hand side of the tine path 9 of the rake member 4 overlaps the outermost right-hand part of the right-hand side of the tine path 18 of the rake member 11. Likewise, seen in the direction of travel A, the outermost right-hand part of the tine path 10 of the rake member 5 overlaps the outermost left-hand part of the tine path 19 of the rake member 12.

By means of an intermediate shaft 20 the transmission box 17 is coupled with the transmission box 8 which can be coupled itself, via one or more intermediate shafts, with the non-shown drive shaft of the tractor.

The rake members 4, 5 respectively have less tine arms 22, eleven in this embodiment, than the rake members 11, 12 respectively, which are each provided with thirteen tine arms 23 in this embodiment.

To each tine arm two downwardly extending tines are fastened in a manner known per se.

To the frame beam 1, between the two groups of rake members, there is disposed a pair of running wheels 24 for supporting the frame and the rake members. Seen from above, the running wheels are preferably located in or near the centre of gravity of the implement.

The implement operates as follows.

The machine functions as a rake and the rake members 4 and 5 displace the mown crop (usually grass) lying on the soil to the left, to the right respectively, so that on the left-hand side, on the right-hand side respectively of the group of rake members 4 and 5 there is created a swath 25, 26 respectively.

Seen in the direction of travel A, these swaths 25, 26 respectively are located before the rake members 11, 12 respectively which, as a result thereof, displace the crop lying before the rake members together with the swath to the left, to the right respectively, so that eventually both on the left-hand side and the right-hand side of the implement there is created a large swath 27, 28 respectively.

The rake members 11, 12 respectively have to displace more crop than the rake members 4, 5 respectively and for that reason have more tine arms provided with tines than the rake members 4, 5 respectively.

The distance between each of the running wheels 24 of the frame beam 1 is such that the running wheels, seen in the direction of travel A, move on the raked soil and are consequently located between the swaths 25 and 26.

The distance measured between the swaths 27 and 28 transversely to the direction of travel A may amount to approximately 15 m when the machine is provided with normal rake members having a diameter of approximately 3.60 m.

When the implement moves over the field in a given direction and returns, so that crop is added to the previously created swath on the outside thereof, there is formed a swath having a width of approximately 2 meters.

For being brought into a transport position, if required, the first group of rake members 29, 30 can be pivoted upwards about pivotal axes 29, 30 orientated in the direction of travel A. Likewise, for the purpose of being brought into a transport position, the rake members 11, 12 respectively can be pivoted upwards about axes 31 and 32 orientated in the direction of travel A.

In this embodiment the rake members rotate in such a manner that a swath is formed on the left-hand side, the right-hand side respectively of the rake members 11, 12 respectively.

However, the invention also relates to an implement in which the rake members have an opposite direction of rotation, so that a swath is created in the centre of the implement.

The invention is not restricted to the conclusions but also relates to what has been described in the foregoing and to all the details in the drawings.

## Claims

1. An implement for laterally displacing crop lying on the soil, which implement comprises rake members (4, 5, 11, 12) that are driven so as to be rotatable about upwardly orientated axes, which rake members, seen in the direction of travel, are arranged in at least two groups of at least two rake members, said groups being disposed one behind the other, the outer rake members of each group rotating in opposite directions, the distance between the axes of rotation of the outer rake members (4, 5) of the leading group being smaller than the distance between the axes of rotation of the outer rake members (11, 12) of the group of rake members disposed therebehind and the directions of rotation of the outer rake members (4, 5, 11, 12) of each group being opposite to each other in such a manner that in plan view the outer rake members (4, 11) which, seen in the direction of travel, are located on the left-hand side of the implement rotate anticlockwise and the outer rake members (5, 12) which, seen in the direction of travel, are located on the right-hand side rotate clockwise, **characterized in that**, for being brought into a transport position, the rake members (4, 5, 11,12) are foldable up about pivotal axes (29, 30, 31, 32) orientated in the direction of travel.

2. An implement as claimed in claim 1, **characterized in that**, seen in the direction of travel, there are arranged two groups of running wheels (24) between the rake members (4, 5, 11, 12), the distance between the outer lateral sides of the running wheels (24) being smaller than the distance between the outer lateral sides of the paths described by the tines of the outer rake members (4, 5) of the leading group.

3. An implement as claimed in any one of the preceding claims, **characterized in that** the rake members (4, 5) of one group have an other number of tine arms than the rake members (11, 12) of the other group.

4. An implement as claimed in claim 3, **characterized in that** the rake members (4, 5) of the leading group have less tine arms than the rake members (11, 12) of the trailing group.

5. An implement as claimed in claim 4, **characterized in that** the rake members (4, 5) of the leading group each have eleven tine arms and the rake members (11, 12) of the group disposed therebehind each have thirteen tine arms.

6. An implement as claimed in any one of the preceding claims, **characterized in that** each of the outer rake members (4, 5) of the leading group rakes the crop laterally into a swath which, seen in the direction of travel, will be located before the rake member (11, 12) arranged on the outer lateral side of a group disposed therebehind.

7. An implement as claimed in any one of claims 2-6, **characterized in that** the running wheels (24) are located between the swaths created by the outer rake members of the leading group of rake members (4, 5).

8. An implement as claimed in any one of the preceding claims, **characterized in that** the implement is provided with a frame beam (1) extending substantially in the direction of travel.

9. An implement as claimed in claim 8, **characterized in that** the rake members of each group are fitted to a frame beam (2, 3, 13, 14) extending transversely to the direction of travel of the implement, which frame beam is fitted to the frame beam (1) extending in the direction of travel.

10. An implement as claimed in any one of the preceding claims, **characterized in that** each rake member can be pivoted upwards about a separate pivotal axis for being brought into the transport position.

## Patentansprüche

1. Vorrichtung zum Seitwärtsverlagern von auf dem Boden liegendem Erntegut, wobei die Vorrichtung Rechkörper (4, 5, 11, 12) umfaßt, die derart angetrieben sind, daß sie um aufwärts gerichtete Achsen drehbar sind, wobei die Rechkörper in Arbeitsrichtung betrachtet in mindestens zwei Gruppen von mindestens zwei Rechkörpern angeordnet sind, wobei die Gruppen hintereinander angeordnet sind, wobei sich die äußeren Rechkörper jeder Gruppe in entgegengesetzten Richtungen drehen, wobei der Abstand zwischen den Drehachsen der äußeren Rechkörper (4, 5) der vorderen Gruppe geringer ist als der Abstand zwischen den Drehachsen der äußeren Rechkörper (11, 12) der dahinterliegenden Gruppe von Rechkörpern und die Drehrichtungen der äußeren Rechkörper (4, 5, 11, 12) jeder Gruppe zueinander entgegengesetzt sind, derart, daß sich in Draufsicht die äußeren Rechkörper (4, 11), die in Arbeitsrichtung betrachtet auf der linken Seite der Vorrichtung angeordnet sind, im Gegenuhrzeigersinn drehen und sich die äußeren Rechkörper (5, 12), die in Arbeitsrichtung betrachtet auf der rechten Seite angeordnet sind, im Uhrzeigersinn drehen,
**dadurch gekennzeichnet, daß** die Rechkörper (4, 5, 11, 12) zur Einstellung in eine Transportlage um sich in Arbeitsrichtung erstreckende Schwenkachsen (29, 30, 31, 32) hochklappbar sind.

2. Vorrichtung nach Anspruch 1,
**dadurch gekennzeichnet, daß** in Arbeitsrichtung betrachtet zwei Gruppen von Laufrädern (24) zwischen den Rechkörpern (4, 5, 11, 12) angeordnet sind, wobei der Abstand zwischen den Außenseiten der Laufräder (24) geringer ist als der Abstand zwischen den Außenseiten der Bewegungswege, die von den Zinken der äußeren Rechkörper (4, 5) der vorderen Gruppe beschrieben werden.

3. Vorrichtung nach einem der vorhergehenden Ansprüche, **dadurch gekennzeichnet, daß** die Rechkörper (4, 5) der einen Gruppe eine andere Anzahl von Zinkenarmen aufweisen als die Rechkörper (11, 12) der anderen Gruppe.

4. Vorrichtung nach Anspruch 3,
**dadurch gekennzeichnet, daß** die Rechkörper (4, 5) der vorderen Gruppe weniger Zinkenarme aufweisen als die Rechkörper (11, 12) der hinteren Gruppe.

5. Vorrichtung nach Anspruch 4,
**dadurch gekennzeichnet, daß** die Rechkörper (4, 5) der vorderen Gruppe jeweils elf Zinkenarme und die Rechkörper (11, 12) der dahinter angeordneten Gruppe jeweils dreizehn Zinkenarme aufweisen.

6. Vorrichtung nach einem der vorhergehenden Ansprüche,
**dadurch gekennzeichnet, daß** jeder der äußeren Rechkörper (4, 5) der vorderen Gruppe das Gut seitwärts zu einem Schwad recht, der in Arbeitsrichtung betrachtet vor dem Rechkörper (11, 12) liegt, der an der Außenseite einer dahinterliegenden Gruppe angeordnet ist.

7. Vorrichtung nach einem der Ansprüche 2 bis 6,
**dadurch gekennzeichnet, daß** die Laufräder (24) zwischen den von den äußeren Rechkörpern der vorderen Gruppe von Rechkörpern (4, 5) gebildeten Schwaden angeordnet sind.

8. Vorrichtung nach einem der vorhergehenden Ansprüche,
**dadurch gekennzeichnet, daß** die Vorrichtung mit einem Rahmenträger (1) versehen ist, der sich im wesentlichen in Arbeitsrichtung erstreckt.

9. Vorrichtung nach Anspruch 8,
**dadurch gekennzeichnet, daß** die Rechkörper jeder Gruppe an einem Rahmenträger (2, 3, 13, 14) angebracht sind, der sich quer zur Arbeitsrichtung der Vorrichtung erstreckt, wobei der Rahmenträger an dem Rahmenträger (1) angeordnet ist, der sich in Arbeitsrichtung erstreckt.

10. Vorrichtung nach einem der vorhergehenden Ansprüche,
**dadurch gekennzeichnet, daß** jeder Rechkörper zur Einstellung in die Transportlage um eine separate Schwenkachse nach oben geschwenkt werden kann.

## Revendications

1. Appareil pour déplacer latéralement des végétaux se trouvant sur le sol, lequel appareil comprend des éléments de râteau (4, 5, 11, 12) qui sont entraînés de manière à pouvoir tourner le long d'axes orientés vers le haut, lesquels éléments de râteau, représentés dans la direction du déplacement, sont agencés dans au moins deux groupes d'au moins deux éléments de râteau, lesdits groupes étant disposés l'un derrière l'autre, les éléments de râteau externes de chaque groupe effectuant une rotation dans des directions opposées, la distance entre les axes de rotation des éléments de râteau externes (4, 5) du groupe avant étant inférieure à la distance entre les axes de rotation des éléments de râteau externes (11, 12) du groupe des éléments de râteau disposés derrière et les directions de rotation des éléments de râteau externes (4, 5, 11, 12) de chaque groupe étant opposées les unes aux autres d'une manière telle qu'en vue en plan les éléments de râteau externes (4, 11) qui, représentés dans la direction du déplacement, sont situés du côté gauche de l'appareil, effectuent une rotation dans le sens contraire des aiguilles d'une montre et que les éléments de râteau externes (5, 12) qui, représentés dans la direction du déplacement, sont situés du côté droit, effectuent une rotation dans le sens des aiguilles d'une montre, **caractérisés en ce que**, afin d'être amenés en position de transport, les éléments de râteau (4, 5, 11, 12) sont pliables vers le haut le long d'axes de pivotement (29, 30, 31, 32) orientés dans la direction du déplacement.

2. Appareil selon la revendication 1, **caractérisé en ce que**, représentés dans la direction du déplacement, deux groupes de roues courantes (24) sont agencés entre les éléments de râteau (4, 5, 11, 12), la distance entre les côtés latéraux externes des roues de roulement (24) étant inférieure à la distance entre les côtés latéraux externes des trajets décrits par les dents des éléments de râteau externes (4, 5) du groupe avant.

3. Appareil selon l'une quelconque des revendications précédentes, **caractérisé en ce que** les éléments de râteau (4, 5) d'un groupe ont un nombre de bras porte-dents différent de celui des éléments de râteau (11, 12) de l'autre groupe.

4. Appareil selon la revendication 3, **caractérisé en ce que** les éléments de râteau (4, 5) du groupe avant ont moins de bras porte-dents que les éléments de râteau (11, 12) du groupe arrière.

5. Appareil selon la revendication 4, **caractérisé en ce que** les éléments de râteau (4, 5) du groupe avant ont chacun onze bras porte-dents et les éléments de râteau (11, 12) du groupe disposé derrière ont chacun treize bras porte-dents.

6. Appareil selon l'une quelconque des revendications précédentes, **caractérisé en ce que** chacun des éléments de râteau externes (4, 5) du groupe avant ratisse les végétaux latéralement en un andain qui, représenté dans la direction du déplacement, sera situé devant l'élément de râteau (11, 12) agencé sur le côté latéral externe d'un groupe disposé derrière.

7. Appareil selon l'une quelconque des revendications 2 à 6, **caractérisé en ce que** les roues de roulement (24) sont situées entre les andains créés par les éléments de râteau externes du groupe avant des éléments de râteau (4, 5).

8. Appareil selon l'une quelconque des revendications précédentes, **caractérisé en ce que** l'appareil est équipé d'une poutre de châssis (1) s'étendant sensiblement dans la direction du déplacement.

9. Appareil selon la revendication 8, **caractérisé en ce que** les éléments de râteau de chaque groupe sont ajustés à une poutre de châssis (2, 3, 13, 14) s'étendant transversalement vers la direction du déplacement de l'appareil, dont la poutre de châssis est ajustée à la poutre de châssis (1) s'étendant dans la direction du déplacement.

10. Appareil selon l'une quelconque des revendications précédentes, **caractérisé en ce que** chaque élément de râteau peut être pivoté vers le haut le long d'un axe de pivotement séparé afin d'être amené en position de transport.
